**Europäisches Patentamt**

**European Patent Office**

**Office européen des brevets**

(19)

(11) Veröffentlichungsnummer: **0 198 057**
**B1**

(12) **EUROPÄISCHE PATENTSCHRIFT**

(45) Veröffentlichungstag der Patentschrift: **11.04.90**

(51) Int. Cl.⁵: **H 04 N 5/45**

(21) Anmeldenummer: **85905401.7**

(22) Anmeldetag: **09.10.85**

(86) Internationale Anmeldenummer:
**PCT/EP85/00525**

(87) Internationale Veröffentlichungsnummer:
**WO 86/02515 24.04.86 Gazette 86/09**

(54) VERFAHREN ZUR SYNCHRONISATION DER HORIZONTALABLENKUNG VON ELEKTRONENSTRAHLEN IN FERNSEHEMPFÄNGERN.

(30) Priorität: **19.10.84 DE 3438366**

(43) Veröffentlichungstag der Anmeldung:
**22.10.86 Patentblatt 86/43**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**EP-A-0 021 930**
**GB-A-2 033 692**
**US-A-3 898 377**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **HARTMANN, Uwe**
**Tallardstrasse 15**
**D-7730 Villingen-Schwenningen (DE)**
Erfinder: **MAI, Udo**
**Mühleschweg 2**
**D-7730 VS-Tannheim (DE)**
Erfinder: **OHNEMUS, Fritz**
**An der Hammerhalde 13**
**D-7730 Villingen-Schwenningen (DE)**

Courier Press, Leamington Spa, England.

# Beschreibung

Die Erfindung geht aus von einem Verfahren zur Synchronisation der Horizontalablenkung von Elektronenstrahlen in Fernsehempfängern.

Es ist z.B. ein Fernsehwiedergabesystem bekannt (GB-A-2033692), bei welchem eine Zeilensynchronisationsschaltung vorgesehen ist, die einen Oszillator besitzt, der von Zeilensynchronimpulsen des Videosignals synchronisiert wird. Bei Fehlen des Zeilensynchronimpulses schwingt der Oszillator unter Steuerung der nicht abgeschalteten Synchronisationsschaltung frei weiter, wodurch Störimpulse, die an die Zeilensynchronisationsschaltung gelangen, die Synchronisation beeinträchtigen.

Beim Betrieb eines Fernsehempfängers insbesondere in Verbindung mit Anordnung zur Einblendung von alphanumerischen Zeichen auf dem Bildschirm entstehen Synchronisationsprobleme dadurch, daß die vom Sender gesteuerten Ablenkgeneratoren des Fernsehempfängers mit dem Auslesegenerator für den Zeichenspeicher genau aufeinander abgestimmt sein müssen. Besonders kritisch ist der Fall, wenn kein Sendesignal vorhanden ist, da die Ablenkgeneratoren durch das Rauschen sowohl in der Frequenz als auch in der Phase moduliert sind. Da aber der Auslesevorgang für die Zeichen in seiner Frequenz nach einem vorgegebenen festen Raster folgt, ergeben sich Synchronisationsprobleme dadurch, daß die Zeichen in Bezug auf den nicht synchronisierten Hintergrund eines verrauschten Bildes in horizontaler Richtung zittern, wodurch die Lesbarkeit der Zeichen sehr beeinträchtigt ist. Auch Zeichen im sogenannten "On-Screen-Betrieb", das sind Darstellung von Einstellwerten des Fernsehempfangsgerätes wie z.B. Lautstärke, Helligkeit, Farbe oder Kanal auf dem Bildschirm werden durch Rauschimpulse gestört wiedergegeben, was sich durch horizontales Zittern bemerkbar macht. Videotextseiten, die im sogenannten "After-Hour-Betrieb" auch nach Sendeschluß wiedergegeben werden sollen, unterliegen ebenfalls diesem Zittern.

Der Erfindung liegt die Aufgabe zugrunde, auch bei einem fehlenden Sendersignal dieses Zittern der Zeichen zu beseitigen. Diese Aufgabe wird durch die im Patentanspruch angegebene Erfindung gelöst. Weitere Maßnahmen der Erfindung sind in den Unteransprüchen beschrieben.

Durch das angemeldete Verfahren wird erreicht, daß der Horizontal-Ablenkgenerator des Fernsehempfängers während des sichtbaren Teils des wiedergegebenen Bildes durch Rauschen infolge des fehlenden Sendersignals nicht gestört wird, sondern zwar frei, aber stabil schwingt. Dadurch ist ein fester Bezug zwischen der Frequenz des Ablenkgenerators und des Auslesegenerators gegeben. Dadurch, daß während der Bildaustastzeit, die etwa der Dauer von 21 Zeilen entspricht, eine durch ein Sendersignal bewirkte Synchronisation des Empfängers ermöglicht wird, kann immer dann, wenn dieses zwischenzeitlich vorliegt, sofort auf die Sendersynchronisation umgeschaltet werden und bleiben. Durch das derart gebildete Synchronisierfenster während der Bildaustastzeit wird erreicht, daß bei gleichzeitiger Wiedergabe eines Sendersignals und der alphanumerischen Zeichen die Synchronisation auf den Sender unmittelbar erfolgt.

Als Kriterium für die Umschaltung der Synchronisation kann z.B. die logische Verknüpfung von Vertikalrücklaufsignal und Tonstummsteuersignal (MUTE) dienen.

Die Ausschaltung der Synchronisation des Empfängers kann z.B. dadurch erfolgen, daß der Signalweg zum Amplitudensieb unterbrochen wird. Die Ausschaltung ist auch dadurch realisierbar, daß der Phasenvergleich der Synchronisation außer Betrieb gesetzt wird oder daß die Zeitkonstante des Phasenvergleichs wesentlich vergrößert wird.

## Patentansprüche

1. Verfahren zur Synchronisation der Horizontalablenkung von Elektronenstrahlen in einem Fernsehempfänger mit einer Synchronisationsschaltung für die Horizontalablenkung, wobei die Synchronisationsschaltung während der Zeit des vertikalen Bildrücklaufs aktiv geschaltet ist, die bei vorhandenen Synchronsignalen eines Sendersignals auch während der Zeit des vertikalen Bildhinlaufs aktiv geschaltet bleibt, dadurch gekennzeichnet, daß nur bei Fehlen von Synchronsignalen eines Sendersignals die Synchronisationsschaltung während der Zeit des sichtbaren Teils des wiedergegebenen Bildes ausser Betrieb gesetzt wird.

2. Verfahren nach Anspruch 1, dadurch gekennzeichnet, daß das Umschaltsignal für die Synchronisation aus dem Vertikalrücklaufsignal (VR) und dem Stummsteuersignal (MUTE) gewonnen wird.

3. Verfahren nach Anspruch 1, dadurch gekennzeichnet, daß die Abschaltung der Synchronisation durch Unterbrechen des Signalwegs zum Amplitudensieb erfolgt.

4. Verfahren nach Anspruch 1, dadurch gekennzeichnet, daß die Abschaltung der Synchronisation durch Unterbrechung des Phasenvergleichs der Synchronisation erfolgt.

5. Verfahren nach Anspruch 1, dadurch gekennzeichnet, daß die Abschaltung der Synchronisation durch eine wesentliche Vergrößerung der Zeitkonstante des Phasenvergleichs der Synchronisation erfolgt.

## Revendications

1. Procédé de synchronisation de la déflexion horizontale du faisceau électronique dans un récepteur de télévision comportant un circuit de synchronisation pour la déflexion horizontale, le circuit de synchronisation étant mis à l'état actif pendant la durée de retour vertical de l'image et restant à l'état actif même pendant la durée de l'aller vertical de l'image en présence de signaux de synchronisation d'un signal de l'émetteur, caractérisé en ce que le circuit de synchronisation est désactivé pendant la durée de la partie visible de l'image reproduite uniquement en l'absence de signaux de synchronisation d'un signal de l'émetteur (Vn).

2. Procédé selon la revendication 1, caractérisé en ce que le signal de commutation pour la synchronisation est obtenu à partir du signal de retour vertical (VR) et du signal de commande de la suppression du son (MUTE).

3. Procédé selon la revendication 1, caractérisé en ce que l'arrêt de la synchronisation s'effectue en interrompant le trajet du signal vers le séparateur de synchronisation.

4. Procédé selon la revendication 1, caractérisé en ce que l'arrêt de ia synchronisation s'effectue en interrompant la comparaison des phases de la synchronisation.

5. Procédé seion la revendication 1, caractérisé en ce que l'arrêt de la synchronisation s'effectue par un accroissement sensible de la constante de temps de la comparaison des phases de la synchronisation.

**Claims**

1. Process for the synchronisation of the horizontal deflection of electron beams in a television receiver with a synchronisation circuit for the horizontal deflection, the synchronisation circuit being actively connected during the vertical flyback time and, in the presence of synchronisation signals of a transmitter signal, remaining actively connected also during the vertical sweep time, characterised in that only in the absence of synchronisation signals of a transmitter signal is the synchronisation signal switched off during the time of the visible part of the reproduced picture.

2. Process according to claim 1, characterised in that the switch-over signal for the synchronisation is derived from the vertical flyback signal (VR) and the mute control signal (MUTE).

3. Process according to claim 1, characterised in that the switching off of the synchronisation results from interruption of the signal path to the amplitude filter.

4. Process according to claim 1, characterised in that the switching off of the synchronisation results from interruption of the phase comparison of the synchronisation.

5. Process according to claim 1, characterised in that the switching off of the synchronisation results from a substantial increase of the time constant of the phase comparison of the synchronisation.